# EUROPÄISCHE PATENTANMELDUNG

(11) **EP 1 124 141 A2**
(43) Veröffentlichungstag der Anmeldung: **16.08.2001**
(21) Anmeldenummer: 01103074.9
(22) Anmeldetag: 09.02.2001
(51) Int. Cl.: G01S 5/16

(54) **Verfahren zur Bestimmung einer Position in einem Raum**

(30) Priorität: 09.02.2000 DE 10005561
(71) Anmelder: ROBERT BOSCH GMBH, 70442 Stuttgart (DE)
(72) Erfinder: Kynast, Andreas, 31139 Hildesheim (DE); Baierl, Wolfgang, 73630 Remshalden (DE)

(57) **Zusammenfassung**

Die Erfindung bezieht sich auf ein Verfahren zur Positionsbestimmung in einem Raum, z.B. einem geschlossenen oder verdeckten Raum.

Um mit relativ geringem Aufwand eine genaue Positionsbestimmung auch in geschlossenen Räumen zu ermöglich, wird vorgeschlagen, daß von einer Sendeeinrichtung (5) unterschiedliche Positionsinformationssignale (Si) zu verschiedenen Rasterpunkten (Pos i) des Raumes ausgesendet werden, und eine in einem Rasterpunkt (Pos j) sich befindende Navigationseinrichtung (6) ein Positionsinformationssignal (Sj) empfängt und seine Position in dem Raum als Position des Rasterpunktes ermittelt.

## Beschreibung

Die Erfindung bezieht sich auf ein Verfahren zur Bestimmung einer-Position in einem Raum, insbesondere einem verdeckten bzw. geschlossenen Raum, eine Navigationseinrichtung sowie eine Sendeeinrichtung für ein derartiges Verfahren.

Zur Bestimmung der Position einer Navigationseinrichtung sind verschiedene Verfahren bekannt. Zum einen werden die Positionen von Navigationseinrichtungen von z.B. Kraftfahrzeugen und Schiffen mittels eines Global-Positioning-Systems (GPS) ermittelt, bei dem Satelliten Signale aussenden, die von der Navigationseinrichtung empfangen werden und aus einem Vergleich der verschiedenen Signale die geographische Position auf der Erde ermittelt werden kann.

GPS-Signale können jedoch im allgemeinen in verdeckten bzw. geschlossenen Räumen nicht empfangen werden. Weiterhin ist das Auflösungsvermögen bei einer Positionsbestimmung aufgrund der GPS-Signale begrenzt.

In geschlossenen Räumen ist eine Ortsbestimmung z.B. mittels Markierungen an der Decke des Raumes bekannt, bei der eine vertikal gerichtete Kamera der Navigationseinrichtung Symbole an der Decke erfaßt und hieraus die Position in dem Raum ermittelt.

Eine derartige Positionsbestimmung in geschlossenen Räumen ist jedoch aufwendig, da hierzu zunächst verschiedene Symbole entlang der ganzen Decke des Raumes angebracht werden müssen, die eine eindeutige Bestimmung der Position einer unterhalb jedes Symbols angeordneten Navigationseinrichtung ermöglichen müssen. Dies führt insbesondere bei großen Räumen, z.B. Messehallen, zu einem erheblichen Aufwand. Weiterhin ist eine aufwendige Navigationseinrichtung erforderlich, die eine genaue Ausrichtung der Kamera in vertikaler Richtung sicherstellt. Die genaue Ausrichtung der Kamera der Navigationseinrichtung kann im allgemeinen nur durch einen festen Bezug zum Boden, z.B. bei Verwendung eines Fahrgestells, gewährleistet werden, wohingegen die Benutzung durch eine die Navigationseinrichtung tragende Person im allgemeinen keine vertikale Ausrichtung der Kamera ermöglicht.

Weiterhin ist eine hohe optische Auflösung zur genauen Erkennung der Symbole an der eventuell weiter entfernt angeordneten Decke erforderlich. Die Erkennung der jeweiligen Symbole erfordert zudem eine Bildverarbeitung, bei der das von der Kamera erfaßte Symbol mit vorgespeicherten Referenzsymbolen verglichen werden muß.

Somit ist ein derartiges Verfahren und System zur Positionsbestimmung zu aufwendig und erfordert komplexe Navigationseinrichtungen mit komplexer Hard- und Software. Hierbei ist auch eine Änderung der Positionsbezeichnungen nachträglich im allgemeinen nicht mehr möglich, da hierzu zunächst die an der Decke angebrachten Symbole geändert werden müßten.

Der Erfindung liegt die Aufgabe zugrunde, gegenüber dem Stand der Technik Verbesserungen zu schaffen und insbesondere eine genaue Positionsbestimmung mit relativ geringem Aufwand zu ermöglichen.

Diese Aufgabe wird erfindungsgemäß zum einen gelöst durch ein Verfahren zur Bestimmung einer Position in einem Raum, insbesondere einem geschlossenen oder verdeckten Raum, bei dem von einer Sendeeinrichtung unterschiedliche Positionsinformationssignale zu verschiedenen Rasterpunkten des Raumes ausgesendet werden, und eine in einem Rasterpunkt sich befindende Navigationseinrichtung ein Positionsinformationssignal empfängt und seine Position in dem Raum als Position des Rasterpunktes ermittelt.

Weiterhin wird diese Aufgabe gelöst durch eine Navigationseinrichtung für ein derartiges Verfahren, mit einem Empfänger zum Empfangen von Positionsinformationssignalen, insbesondere Positionsinformationssignalen im optischen oder Infrarot-Bereich, einer Kartenspeichereinrichtung zum Speichern von Kartendaten des Raumes, einer Verarbeitungseinheit zur Berechnung der Position in einer Karte aufgrund der empfangenen Positionsinformationssignale und der Kartendaten, und einer Ausgabeeinrichtung zur Ausgabe eines Positionssignales.

Des weiteren wird diese Aufgabe gelöst durch eine Sendeeinrichtung für ein derartiges Verfahren, mit einer optischen Scanneinrichtung, die in verschiedene Rasterwinkelabschnitte eines Winkelbereiches unterschiedliche Positionsinformationssignale aussendet.

Erfindungsgemäß werden somit von einer Sendeeinrichtung zu verschiedenen Rasterpunkten des Raumes unterschiedliche Positionsinformationssignale ausgesendet. Somit kann durch eine entsprechende Unterteilung des Raumes in verschiedene Rasterpunkte eine gewünschte räumliche Auflösung eingestellt werden, bei der verschiedene Rasterpunkte unterschiedlich bezeichnet werden. Die Navigationseinrichtung muß lediglich an der jeweiligen Position das Positionsinformationssignal der Sendeeinrichtung empfangen, um beurteilen zu können, bei welchem Rasterpunkt des Raumes sie sich befindet.

Erfindungsgemäß entfällt somit die Anbringung verschiedener Symbole oder Markierungen in dem Raum, z.B. an der Decke des Raumes, zur Kennzeichnung einer jeweiligen Position. Durch die Verwendung der Sendeeinrichtung kann zudem die gewünschte Aufteilung des Raumes und die örtliche Auflösung je nach den Anforderungen variiert werden. Die Navigationseinrichtung muß nicht auf entsprechende Markierungen im Raum ausgerichtet werden, sondern lediglich die von der Sendeeinrichtung ausgesendeten Positionsinformationssignale empfangen, die für die verschiedenen Rasterpunkte unterschiedlich sind. Somit kann mittels einer zentralen Sendeeinrichtung, die z.B. in einem verdeckten Raum an zentraler Position z.B. unter der Decke angebracht werden kann, und einfache, vorteilhafterweise tragbare Navigationseinrichtungen eine genaue Positionsbestimmung erreicht werden.

Die Positionsinformationssignale können insbesondere als optische Signale im Wellenlängenbereich des sichtbaren Lichtes oder des Infrarotlichtes ausgesendet werden. Hierbei kann insbesondere ein optischer Laser oder Infrarot-Laser eingesetzt werden, da hierdurch eine genaue Bündelung des Strahles in dem jeweiligen Rasterpunkt erreicht werden kann. Die verschiedenen Rasterpunkte können von der Sendeeinrichtung vorteilhafterweise nacheinander abgescannt bzw. abgefahren werden.

Weiterhin ist es möglich, daß verschiedene Laserstrahlen eingesetzt werden, die jeweils nacheinander einige der Rasterpunkte des Raumes abscannen.

Erfindungsgemäß kann das von der Sendeeinrichtung ausgesendete Positionsinformationssignal vorteilhafterweise mit Kartendaten verglichen werden, so daß die Ermittlung einer Position in der jeweiligen Karte möglich ist. Hierzu kann im einfachsten Fall die Karte die Aufteilung des Raumes in die verschiedenen Rasterpunkte wiedergeben und bei Empfangen eines Positionsinformationssignales den dazugehörigen Rasterpunkt wiedergeben bzw. in der Karte markieren. Die Kartendaten können entweder in der Navigationseinrichtung vorgespeichert sein oder der Navigationseinrichtung über die erfindungsgemäße Sendeeinrichtung oder eine zusätzliche Sendeeinrichtung über z.B. ein DSRC (Dedicated-Short-Range-Communication)- oder GSM-Funksignal und eine entsprechende Funkschnittstelle der Navigationseinrichtung mitgeteilt werden. Hierbei ist es insbesondere auch möglich, daß Kartendaten in einer Speichereinrichtung der Navigationseinrichtung vorgespeichert sind und zeitweise über Funksignale erneuert bzw. geändert werden.

Erfindungsgemäß kann die Positionsbestimmung in dem Raum mittels der erfindungsgemäßen Sendeeinrichtung mit einer Positionsbestimmung außerhalb des Raumes z.B. durch ein Global Positioning System-Signal (GPS-Signal) und ggf. ein Differential-GPS-Signal (DGPS) kombiniert werden. Somit wird eine Positionsbestimmung innerhalb eines größeren Bereiches möglich, der zum einen offene Teilabschnitte, in denen ein GPS-Signal und DGPS-Signal empfangen werden kann, und zum anderen ein oder mehrere verdeckte bzw. geschlossene Räume umfassen kann. Die Navigationseinrichtung kann hierbei automatisch bei Verlassen eines Raumes von der Positionsbestimmung mittels der erfindungsgemäßen

Sendeeinrichtung auf die Positionsbestimmung mittels GPS-Signales umschalten. Die aktuellen Daten der für den jeweiligen verdeckten Raum erforderlichen Karte können der Navigationseinrichtung jeweils bei Betreten des betreffenden Raumes über die Funkschnittstelle mitgeteilt werden.

Erfindungsgemäß kann zusätzlich zur Bestimmung der Position auch eine gewünschte Richtung ermittelt werden, indem die ermittelte Position mit einer Zielposition verglichen wird. Somit kann erfindungsgemäß ein Navigationsverfahren auf Grundlage der Kartendaten durchgeführt werden, wobei in den Kartendaten die für den Benutzer verwendbaren Wege zwischen den Rasterpunkten enthalten sein können, so daß aus dem Vergleich der jeweiligen Position mit der Zielposition ein kürzester Weg, z.B. durch Anzeigen von Richtungspfeilen in der Karte, angezeigt werden kann. Hierbei können in der Navigationseinrichtung mehrere, aufeinanderfolgende Zielrasterpunkte eingegeben werden, wobei nach Einreichen eines Rasterpunktes bereits der Weg zum nächsten Rasterpunkt angezeigt wird.

Die erfindungsgemäße Sendeeinrichtung weist eine optische Scanneinrichtung auf, mit der die Positionsinformationssignale in Rasterwinkelabschnitte ausgesendet werden, die bei Anbringung der Sendeeinrichtung in dem Raum, z.B. unterhalb der Decke des Raumes, den jeweiligen Rasterpunkten des Raumes entsprechen. Die Sendeeinrichtung kann insbesondere eine Einstelleinrichtung zur Einstellung der Winkelabstände der Rasterwinkelabschnitte sowie der jeweiligen Öffnungswinkel aufweisen, so daß eine Anpassung je nach der örtlichen Anbringung der Sendeeinrichtung in dem betreffenden Raum sowie der Größe und Form des Raumes, sowie der erforderlichen örtlichen Auflösung zur Differenzierung der Rasterpunkte ermöglicht ist.

Die Erfindung wird im folgenden anhand der beiliegenden Zeichnungen an einigen Ausführungsformen näher erläutert. Es zeigen:
- Fig. 1 -: eine Seitenansicht eines Raumes mit einer erfindungsgemäßen Sendeeinrichtung;
- Fig. 2 -: eine Draufsicht auf den Raum;
- Fig. 3 -: den Aufbau einer erfindungsgemäßen Navigationseinrichtung.

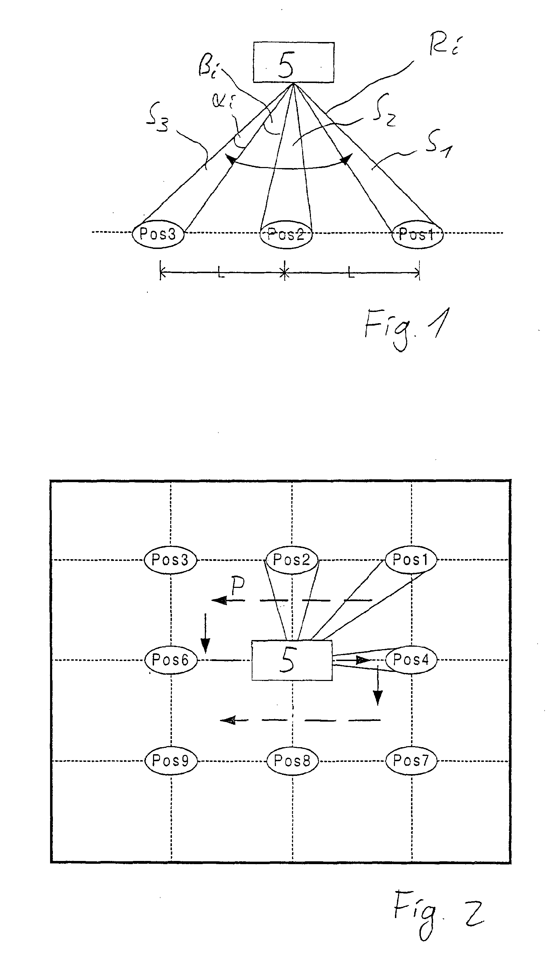

Gemäß Fig. 1 ist ein als erfindungsgemäße Sendeeinrichtung dienender Scanner 5 in einem Raum, z.B. unterhalb der Decke eines verdeckten Raumes, angebracht. Der Raum kann beispielsweise eine Messehalle mit Dach und geschlossenen, teilweise oder vollständig offenen Seitenwänden sein. Der Scanner 5 ist vorteilhafterweise in der Mitte des Raumes angebracht. Der Scanner sendet Positionsinformationssignale Si, i = 1, 2, 3, ..... in einen vorab eingestellten Winkelbereich nach unten aus. Gemäß Fig. 1, 2 sind die Winkelbereiche dabei derartig eingestellt, daß verschiedene Rasterpunkte Pos 1 bis Pos 9 in dem Raum von den Strahlen des Scanners 5 überstrichen werden.

Die Rasterpunkte Pos i können beispielsweise den relevanten Raum vollständig ausfüllen; im allgemeinen ist es jedoch nicht notwendig, sämtliche Bereiche des Raumes von den Rasterpunkten zu erfassen. Gemäß Fig. 1, 2 können zwischen den einzelnen Rasterpunkten Pos i auch Freiräume verbleiben, in die kein Positionsinformationssignal ausgesendet wird. So ist es beispielsweise in einer Messehalle lediglich erforderlich, in die Wege zwischen Messeständen Positionsinformationssignale auszusenden, damit die diese Wege benutzenden Messebesucher mit diesen Informationen versorgt werden.

Der Scanner 5 sendet gemäß Fig. 1, 2 in Rasterwinkelbereiche Ri Strahlen z.B. sichtbaren Lichtes oder Infrarot-Lichtes aus. Hierzu kann in dem Scanner 5 beispielsweise ein Laser oder eine lichtbündelnde Optik vorgesehen sein, die eine hinreichend scharfe Begrenzung des
Lichtstrahls auf die Rasterwinkelbereiche bzw die Bereiche der Rasterpunkte Pos i ermöglicht. Der Scanner 5 scannt vorteilhafterweise die einzelnen Rasterpunkte des Raumes nacheinander ab und wiederholt diesen Vorgang periodisch. Die Winkelabstände zwischen den Strahlen Si können dem Rastermaß L, d.h. den Abständen zwischen den Rasterpunkten Pos i angepaßt werden. Weiterhin kann vorteilhafterweise der Öffnungswinkel ai der einzelnen Strahlen eingestellt werden, so daß lediglich der relevante Bereich des Rasterpunktes Pos i von dem jeweiligen Strahl Si erfaßt wird. Die Winkelabstände ßi und die Öffnungswinkel ai der Rasterwinkelbereiche Ri können entsprechend den gewünschten Anforderungen variiert werden, insbesondere wenn mehrere Rasterpunkte in einer Reihe nebeneinander angeordnet sind, so daß bei größerer Entfernung von der Sendeeinrichtung kleinere Öffnungswinkel und kleinere Winkelabstände ßi zwischen den einzelnen Rasterpunkten erforderlich sind.

Die Wiederholungsrate bzw. Updaterate des Positionsinformationssignals kann ebenfalls eingestellt werden; sie kann insbesondere von der Anzahl der eingestellten Rasterpunkte Pos i abhängen.

Die Positionsinformationssignale Si können eine zur Position zugehörige Nummer sein oder Winkelinformationen über den Abstrahlwinkel vom Scanner 5 oder geographische Ortskoordinaten enthalten. Über den Scanner 5 können zu den einzelnen Rasterpunkten Pos i neben den Positionsinformationssignalen auch zusätzliche, für die Navigation nicht relevante Informationen übertragen werden. Weiterhin ist es möglich, Kartendaten über den Scanner 5 auszusenden.

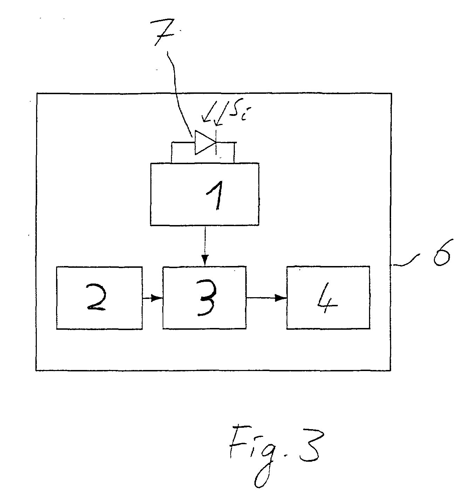

In Fig. 3 ist der Aufbau einer Navigationseinrichtung 6 gezeigt. Sie weist einen Empfänger 1 mit einem Fotoempfänger, z.B. einer Fotodiode 7 auf, der die Positionsinformationssignale Si empfängt. Die Signale werden anschließend an eine Verarbeitungseinrichtung 3 weitergegeben, in die weiterhin Kartendaten eines Kartenspeichers 2 eingelesen werden. Die Verarbeitungseinrichtung 3 ermittelt aus den Positionsinformationssignalen, in welchem Rasterpunkt Pos i des Raumes sich die Navigationseinrichtung 6 befindet. Falls die Positionsinformationssignale Si lediglich geographische Daten, z.B. geographische Ortskoordinaten enthalten, kann der betreffende Rasterpunkt in der Verarbeitungseinrichtung 3 auch durch einen Vergleich der geographischen Daten mit den im Kartenspeicher 2 gespeicherten Kartendaten ermittelt werden. Die Verarbeitungseinrichtung 3 gibt anschließend die Kartendaten mit dem gekennzeichneten Rasterpunkt, in dem die Navigationseinrichtung 6 sich befindet, an die Ausgabeeinrichtung 4 aus, die z.B. eine Anzeigeeinheit (Display) für die Benutzer sein kann.

Erfindungsgemäß ist es möglich, daß der Benutzer einen oder mehrere Zielrasterpunkte eingibt, zu denen er nacheinander gelangen will. Diese Zielrasterpunkte können z.B. im Kartenspeicher 2 gespeichert werden. Die Verarbeitungseinrichtung berechnet aus dem ermittelten gegenwärtigen Rasterpunkt bzw. Ist-Rasterpunkt, in dem die Navigationseinrichtung 6 sich befindet, und dem Zielrasterpunkt einen vorteilhaften Weg für den Benutzer, der in der Anzeigeeinheit 4 z.B. durch Pfeile P, die den jeweiligen Weg entlang vorgegebener Wegstrecken entsprechend, angezeigt wird.

Erfindungsgemäß ist es für den Benutzer vorteilhafterweise möglich, Kartenausschnitte zu vergrößern bzw. zu verkleinern. Die Navigationseinrichtung 6 kann z.B. eine Funkschnittstelle zum Empfang von Funksignalen wie z.B. DSRC (Dedicated-Short-Range-Communication) oder GSM-Daten aufweisen, über die z.B. die Kartendaten übertragen werden.

Weiterhin kann die Navigationseinrichtung 6 zusätzlich mit einem GPS-Empfänger und vorzugsweise einem DGPS-Empfänger ausgestattet sein, mit dem sie außerhalb der Räume über Satelitennavigation ihre Position ermitteln kann. Die Navigationseinrichtung 6 kann z.B. durch einen üblichen Rechner, wie einen PC oder PDA, mit einer speziellen Einsteckkarte, z.B. nach dem PC-Card-Standard, gebildet werden.

Im Kartenspeicher 2 können z.B. folgende Informationen abgelegt sein: Position und Breite der Gänge zwischen den Messeständen, Inhaber der Messestände und Standnummer, Position der Ein- und Ausgänge der Halle. Weiterhin kann die Position des Scanners gespeichert sein, wenn in den Positionsinformationssignalen lediglich relative geographische Ortsangaben vom Scanner 5 übertragen werden.

Vorteilhafterweise kann der erfindungsgemäße Scanner für die Positionsbestimmung bzw. Navigation innerhalb der Räume mit dem GPS/DGPS-Empfänger zur Navigation außerhalb der Räume kombiniert werden. So kann z.B. am Eingang einer Messe ein Besucher die Standnummer der von ihm zu besuchenden Messestände eingeben. Die Navigationseinrichtung 6 ermittelt außerhalb der Messehallen aufgrund des GPS-Signales den Weg zum betreffenden Eingang der relevanten Messehalle und zeigt dem Benutzer eine Karte des Messegeländes mit dem z.B. durch Richtungspfeile angezeigten Weg an. In der Karte können direkt die Nummern der Messehallen sowie die Standnummern sowie z.B. das gesamte Messegelände angezeigt werden.

Beim Betreten einer Messehalle wird über DSRC eine Karte der aktuellen Halle sowie zusätzliche aktuelle Informationen zu der Navigationseinrichtung 6 überspielt. Der Empfänger 1 empfängt das Positionsinformationssignal Si vom Scanner 5, führt ein Mmap matching mit den gespeicherten Kartendaten durch und zeigt dem Benutzer die benötigte Information wie z.B. Position innerhalb der Halle und Richtungspfeil zum Auffinden des gewünschten Messestandes an. Falls der Benutzer den gewünschten Messestand erreicht, wird dies von der Verarbeitungseinrichtung 3 erkannt und die Routeninformation bzw. Routenempfehlung zum nächsten vorher eingegebenen Messestand angezeigt.

## Patentansprüche

1. Verfahren zur Bestimmung einer Position in einem Raum, insbesondere einem geschlossenen oder verdeckten Raum, bei dem
von einer Sendeeinrichtung (5) unterschiedliche Positionsinformationssignale (Si) zu verschiedenen Rasterpunkten (Pos i) des Raumes ausgesendet werden, und
eine in einem Rasterpunkt (Pos j) sich befindende Navigationseinrichtung (6) ein Positionsinformationssignal (Sj) empfängt und seine Position in dem Raum als Position des Rasterpunktes ermittelt.

2. Verfahren nach Anspruch 1, **dadurch gekennzeichnet, daß** die Positionsinformationssignale (Si) optische Signale, insbesondere Laser- oder Infrarot-Laser-Strahlen sind.

3. Verfahren nach Anspruch 1 oder 2, **dadurch gekennzeichnet, daß** die Sendeeinrichtung (5) die Positionsinformationssignale (Si) nacheinander als Scanner-Strahlen bzw. Abtaststrahlen an die Rasterpunkte aussendet.

4. Verfahren nach einem der Ansprüche 1 bis 3, **dadurch gekennzeichnet, daß** die Positionsinformationssignale von der Sendeeinrichtung (5) periodisch ausgesendet werden.

5. Verfahren nach einem der Ansprüche 1 bis 4, **dadurch gekennzeichnet, daß** der Raum ein verdeckter, insbesondere geschlossener Raum ist und die Sendeeinrichtung (5) unter einer Decke des Raumes angeordnet ist und Positionsinformationssignale (Si) zu den Rasterpunkten (Pos i) des Raumes aussendet.

6. Verfahren nach einem der Ansprüche 1 bis 5, **dadurch gekennzeichnet, daß** die Navigationseinrichtung (6) das empfangene Positionsinformationssignal (Pos j) mit Kartendaten, insbesondere vorgespeicherten oder empfangenen Kartendaten, vergleicht und aus dem Vergleich eine Position der Navigationseinrichtung in der Karte ermittelt.

7. Verfahren nach Anspruch 6, **dadurch gekennzeichnet, daß** aus einem Zielrasterpunkt, einem aus dem empfangenen Positionsinformationssignal (Sj) ermittelten Rasterpunkt (Pos j) und den Kartendaten ein Richtungssignal zum Erreichen des Zielrasterpunktes ermittelt und ausgegeben wird.

8. Verfahren nach Anspruch 6 oder 7, **dadurch gekennzeichnet, daß** die Navigationseinrichtung (6) ausserhalb des Raumes ein Global Positioning SystemSignal (GPS-Signal) und vorzugsweise ein DGPS-Signal empfängt, aus dem Global Positioning System-Signal (GPS-Signal) und vorzugsweise dem DGPS-Signal eine Global Positioning System (GPS)-Position ermittelt, und die GPS-Position und die Positionen der Rasterpunkte des Raumes einer gemeinsamen Karte zuordnet.

9. Verfahren nach einem der Ansprüche 6 bis 8, **dadurch gekennzeichnet, daß** die Navigationseinrichtung (6) die Kartendaten als Kartensignale (DSRC, GSM) empfängt.

10. Navigationseinrichtung für ein Verfahren nach einem der Ansprüche 1 bis 9, mit
einem Empfänger (1) zum Empfangen von Positionsinformationssignalen, insbesondere Positionsinformationssignale im optischen oder Infrarot-Bereich,
einer Kartenspeichereinrichtung (2) zum Speichern von Kartendaten des Raumes, und
einer Verarbeitungseinheit (3) zur Berechnung der Position in einer Karte aufgrund der empfangenen Positionsinformationssignale und der Kartendaten, und
einer Ausgabeeinrichtung zur Ausgabe eines Positionssignales.

11. Navigationseinrichtung nach Anspruch 10, **dadurch gekennzeichnet, daß** die Ausgabeeinrichtung eine Anzeigeeinheit zur Anzeige der Karte und der ermittelten Position in der Karte aufweist.

12. Navigationseinrichtung nach Anspruch 10 oder 11, **dadurch gekennzeichnet, daß** der Empfänger eine Fotodetektoreinheit zum Empfangen von Fotosignalen im Bereich des sichtbaren Lichtes oder Infrarot-Lichtes aufweist.

13. Navigationseinrichtung nach einem der Ansprüche 10 bis 12, **dadurch gekennzeichnet, daß** sie eine Empfangseinheit zum Empfangen von Zusatzdaten (DSRC, SMS), insbesondere von Kartendaten, aufweist.

14. Navigationseinrichtung nach einem der Ansprüche 10 bis 13, **dadurch gekennzeichnet, daß** sie eine GPS-Empfangseinrichtung zum Empfangen eines GPS-S-ignals (Global Positioning System-Signals) und vorzugsweise eines Differential-GPS-Signals (DGPS) aufweist, wobei die Verarbeitungseinrichtung (3) aus dem GPS-Signal und vorzugsweise dem Differential-GPS-Signal eine GPS-Position ermittelt und aus der GPS-Position und der Position in der Karte des Raumes eine Gesamtkarte erstellt.

15. Sendeeinrichtung für ein Verfahren nach einem der Ansprüche 1 bis 9, mit einer optischen Scanneinrichtung (5) zum Aussenden von Positionsinformationssignalen (Si) in Rasterwinkelabschnitte (Ri) eines Winkelbereiches, wobei in verschiedene Rasterwinkelabschnitte unterschiedliche Positionsinformationssignale ausgesendet werden.

16. Sendeeinrichtung nach Anspruch 15, **dadurch gekennzeichnet, daß** die Scanneinrichtung Positionsinformationssignale im optischen oder Infrarot-Bereich aussendet.

17. Sendeeinrichtung nach Anspruch 15 oder 16, **dadurch gekennzeichnet, daß** sie unterschiedliche Positionsinformationssignale nacheinander in die verschiedenen Rasterwinkelabschnitte aussendet.

18. Sendeeinrichtung nach einem der Ansprüche 15 bis 17, **gekennzeichnet durch** eine Einstelleinrichtung zur Einstellung der Winkelabstände und/oder Öffnungswinkel der Rasterwinkelabschnitte (Ri).

19. Sendeeinrichtung nach einem der Ansprüche 15 bis 18, **dadurch gekennzeichnet, daß** sie Kartensignale für die Bestimmung einer Position in einer Karte aussendet.
